# EUROPÄISCHE PATENTSCHRIFT

(11) **EP 1 040 136 B1**
(45) Veröffentlichungstag und Bekanntmachung des Hinweises auf die Patenterteilung: **08.10.2003**
(21) Anmeldenummer: 98966262.2
(22) Anmeldetag: 08.12.1998
(51) Int. Cl.: C08F 8/04

(54) **VINYLCYCLOHEXAN BASIERENDE POLYMERE**
VINYL CYCLOHEXANE BASED POLYMERS
POLYMERES A BASE DE VINYLCYCLOHEXANE

(30) Priorität: 18.12.1997 DE 19756368
(43) Veröffentlichungstag der Anmeldung: 04.10.2000
(73) Patentinhaber: Bayer Aktiengesellschaft, 51368 Leverkusen (DE); TEIJIN LIMITED, Osaka-shi Osaka 541-0054 (JP)
(72) Erfinder: WEGE, Volker, D-47799 Krefeld (DE); DUJARDIN, Ralf, Novi, MI 48374 (US); CHEN, Yun, D-47800 Krefeld (DE); RECHNER, Johann, D-47906 Kempen (DE); BRUDER, Friedrich-Karl, D-47800 Krefeld (DE)
(86) Internationale Anmeldenummer: EP9807977
(87) Internationale Veröffentlichungsnummer: WO99032528

(56) Entgegenhaltungen:
- EP-A- 0 317 263
- EP-A- 0 322 731
- EP-A- 0 505 110
- US-A- 4 911 966
- DATABASE WPI Section Ch, Week 9002 Derwent Publications Ltd., London, GB; Class A13, AN 90-013014 XP002100702 & JP 01 294721 A (MITSUBISHI KASEI CORP) , 28. November 1989
- DATABASE WPI Section Ch, Week 9006 Derwent Publications Ltd., London, GB; Class A12, AN 90-040841 XP002100703 & JP 01 317728 A (MITSUBISHI KASEI CORP) , 22. Dezember 1989
- PATENT ABSTRACTS OF JAPAN vol. 014, no. 146 (C-0704), 20. März 1990 & JP 02 018404 A (KAZUO SOGA), 22. Januar 1990
- M. D. GEHLSEN: "HETEROGENEOUS CATALYTIC HYDROGENATION OF POLY(STYRENE): THERMODYNAMICS OF POLY(VINYLCYCLOHEXANE) CONTAINING DIBLOCK COPOLYMERS." MACROMOLECULES, Bd. 26, Nr. 16, 2. August 1993, Seiten 4122-4127, XP000384135 WASHINGTON, US

## Beschreibung

Die vorliegende Erfindung betrifft Vinylcyclohexan (VCH) basierende Polymere und Copolymere mit überwiegend syndiotaktischer Konfiguration und ein Verfahren zu deren Herstellung und deren Verwendung als optisches Material. Die Werkstoffe können durch Extrusion oder Spritzguß zu Formkörpern verarbeitet werden und eignen sich besonders als Substrat für optische Datenspeicher wie Compact Discs, Video dises, wiederbeschreibare optische Dises.

Als Substrat für optische Datenspeicher können transparente Kunststoffe wie aromatisches Polycarbonat, Polymethylmethacrylat oder Polystyrol, verwendet werden. Auch Additionscopolymere aus Ethylen und einem Norbornenderivat oder einem Tetracyclododecenderivat sowie hydrierte Produkte von ringgeöffneten Metathesepolymeren aus Norbornen - oder Tetracyclododecen kommen in Frage.

Für sehr hohe Dichten der Datenspeicherung (>5, insbesondere >10 Gbyte, bezogen auf eine Scheibe von 120 mm Durchmesser) ist jedoch keines der gängigen Substrat-materialien uneingeschränkt verwendbar. Dazu sind sehr niedrige Doppelbrechung und Wasseraufnahme, hohe Wärmeformbeständigkeit, bei ausreichenden mechanischen Eigenschaften und niedrige Schmelzviskosität gleichzeitig erforderlich.

Aromatische Polycarbonate besitzen zwar sehr gute mechanische Eigenschaften und Wärmeformbeständigkeit, aber zu hohe Doppelbrechung und Wasseraufnahme.

Polystyrol weist zu hohe Doppelbrechung und zu niedrige Wärmeformbeständigkeit auf.

Polymethylmethacrylat hat zu hohe Wasseraufnahme und zu geringe Formbeständigkeit.

Additionscopolymere aus Ethylen und einem unpolaren Norbornen- oder Tctracyclododecen besitzen niedrige Doppelbrechung und fast keine Wasserabsorption.

Diese Materialien sind jedoch sehr teuer in ihrer Herstellung. Die Materialien lassen sich nur schwer in optisch reiner Qualität herstellen. Das Vorliegen von Gelanteilen reduziert ebenfalls deren Anwendungen als optische Materialien. Das Abtrennen der Katalysatoren und Cokatalysatoren ist mit erheblichem technischen Aufwand verbunden.

Optische Materialien aus einem Hydrierprodukt eines Polymers aus einer Alkenylaromatischen Kohlenwasserstoffverbindung oder einem Copolymer davon sind in GB 933,596 (= DE-AS 1 131 885) EP-A 317 263, US 4,911,966 und US 5,178,926 beschrieben. Ein Hinweis auf die Konfiguration ist nicht zu entnehmen.

Die Hydrierung von Polystyrol wurde erstmalig von Hermann Staudinger 1929 beschrieben. Neuere Patentliteratur beschäfigt sich mit der zugrundeliegenden Mikrostruktur von Polyvinylcyclohexan bzw, hydriertem Polystyrol. Stand des Wissens ist. daß amorphe Vinylcyclohexan-Polymere eine ataktische Konfiguration und kristalline VCH (Vinylcyclohexan) Polymere entweder isotaktische oder syndiotaktische Konfiguration besitzen (FP-A 0 322 731, EP-A 0 423 100, US-A 5.654,253; US-A 5,612,422; WO 96/34896). Isotaktisches PVCH (Polyvinylcyctohexan) wird in Gegenwart von Ziegler Katalysatoren hergestellt, und besitzt einen hohen Schmelzpunkt (J. Polym. Sci., A2, 5029 (1964). EP-A 0 322 731 beschreibt, daß Vinylcyclohexan-Polymere mit syndiotaktischer Konfiguration durch Hydrierung von syndiotaktischem Polystyrol kristallin sind, wobei die Menge der Diaden wenigstens 75 % und die Menge der Pentaden wenigstens 30 % betragen. WO 94/21694 beschreibt ein Verfahren zur Herstellung von hydrierten Poly(alkykenyl-aromatischen) Polymeren und Poly(alkenyl-aromatischen)/Polydien Blockcopolymeren. Syndiotaktisches Polystyrol wird allgemein erwähnt.

Verfahren die zu isotaktischen, syndiotaktischen und ataktischen hydriertem Polystyrol führen, welche die bisher bekannten Materialeigenschaften zeigen werden in WO 94/21694, US-A 5,352,744 beschrieben, wobei spezielle Katalysatoren eingesetzt werden. Verfahren zur Hydrierung von ataktischem Polystyrol zu ataktischem hydrierten Polystyrol durch die Verwendung spezieller Katalysatoren werden beschrieben in US-A 5,654,253; US-A 5,612,422; WO 96/34896.

Ataktische Polymere sind reguläre Polymere. Sie besitzen definitionsgemäß die möglichen konfigurativen Grundbausteine in gleichen Mengen, mit ideal-statistischer Verteilung von Molekül zu Molekül (IUPAC). Sie zeichnen sich durch die gleiche Zahl an iso- und syndiotaktisehen Diaden aus. Es wird ein amorphes Material mit nur einer Glasstufe ohne kristallinen Anteil beschrieben.

Gegenstand der Erfindung ist ein Vinylcyclohexan basierendes Polymer oder Copolymer, wobei als Comonomere Olefine, Acrylsäurederivate, Maleinsäurederivate. Vinylether oder Vinylester bei der Herstellung eingesetzt werden können, mit syndiotaktischer Konfiguration, dadurch gekennzeichnet, daß die Menge an Diaden größer als 50,1 % und kleiner als 74 % ist. Die Vinylcyclohexan basierenden Polymere sind amorphe Polymere.

Die erfindungsgemäßen Polymeren zeichnen sich durch hohe Transparenz, geringe Doppelbrechung und hohe Wärmeformbeständigkeit aus und lassen sich daher als Substratmaterial für optische Datenspeicher einsetzen. Das bekannte und isotaktische PVCI ist aufgrund seiner Kristallinität für optische Anwendungen ungeeignet.

Gegenstand der Erfindung sind hydrierte Produkte von Polystyrol, die zu einem amorphen hydrierten Polystyrol mit einem Überschuß der raccmischen (syndiotaktisehen) Diaden führt.

Das Vinylcyclohexanpolymer dieser Erfindung ist ein neues amorphes Polymer mit einer definierten Stereostruktur, das sich durch das überwiegende Auftreten der racemischen Diadenkonfiguration auszeichnet und kann durch das beschriebene Verfahrcn effizient hergestellt werden.

Bevorzugt ist ein Vinylcyclohexan basierendes Polymer mit der wiederkehrenden Struktureinheit der Formel (I) 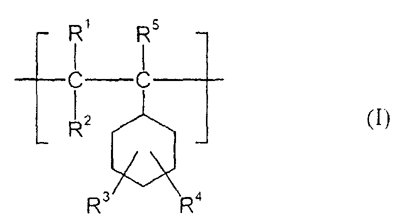 in welcher
- R¹ und: R² unabhängig voneinander für Wasserstoff oder C₁-C₆-Alkyl, vorzugsweise C₁-C₄-Alkyl stehen und
- R³ und R⁴: unabhängig voneinander für Wasserstoff oder für C₁-C₆-Alkyl, vorzugsweise C₁-C₄-Alkyl, insbesondere Methyl und/oder Ethyl, oder R³ und R⁴ gemeinsam für Alkylen, vorzugsweise C₃- oder C₄-Alkylen (ankondensierter 5- oder 6-gliedriger Cycloaliphatischer Ring) stehen,
- R⁵: für Wasserstoff oder C₁-C₆-Alkyl, vorzugsweise C₁-C₄-Alkyl,
- R¹, R² und R⁵: stehen unabhängig voneinander insbesondere für Wasserstoff oder Methyl.

Die Verknüpfung kann außer der stercoregulären Kopf-Schwanz Verknüpfung einen geringen Anteil Kopf-Kopf Verknüpfung aufweisen. Das Vinylcyclohexan basierende amorphe überwiegend syndiotaktische Polymer kann über Zentren verzweigt sein und z.B. eine sternförmige Struktur besitzen.

Als Comonomere können bei der Polymerisation des Ausgangspolymeren (gegebenenfalls substituiertes Polystyrol) vorzugsweise verwendet und in das Polymer miteingebaut werden: Olefine mit im allgemeinen 2 bis 10 C-Atomen, wie beispielsweise Ethylen, Propylen, Isopren, Isobutylen, Butadien, C₁-C₈- vorzugsweise C₁-C₄-Alkylester der Acryl- bzw. Methacrylsäure, ungesättigte cycloaliphatische Kohlenwasserstoffe, z.B. Cyclopentadien, Cyclohexen, Cyclohexadien, gegebenenfalls substituiertes Norbornen. Dicyclopentadien, Dihydrocyclopentadien, gegebenenfalls substituierte Tetracyclododecene, kernalkylierte Styrole, α-Methylstyrol, Divinylbenzol, Vinylester, Vinylsäuren, Vinylether, Vinylacetal, Vinylcyanide wie beispielsweise Acrylnitril, Methacrylnitril, Maleinsäureanhydrid und Mischungen dieser Monomere.

Das erfindungsgemäße amorphe Vinylcyclohexan-Polymer weist einen syndiotaktischen Diadenanteil, ermittelt durch zwei dimensionale NMR-Spektroskopie, von 50,1 bis 74 %, vorzugsweise von 52 - 70 % aus. Verfahren zur Mikrostrukturaufklärung anhand von ¹³C-¹H Korrellationsspektroskopie der Methylen Kohlenstoffatome eines Polymerrückgrates sind allgemein bekannt und werden z.B. von A.M.P. Ros und O. Sudmeijer beschrieben (A.M.P. Ros, O. Sudmeijer, Int. J. Polym. Anal. Charakt. (1997), 4, 39.).

Die Signale von kristallinen isotaktischen und syndiotaktischen Polyvinylcyclohexan werden mittels zweidimensionaler NMR Spektroskopie bestimmt. Das Methylen-Kohlenstoffatom (im Polymerrückgrat) des isotaktischen Polyvinylcyclohexan spaltet im 2 D-CH-Korrelationsspektrum in zwei separierte Protonen Signale auf und zeigt die reine isotaktische Diadenkonfiguration. Syndiotaktisches Polyvinylcyclohexan zeigt dagegen für das Kohlenstoffatom C 1 nur ein Signal im 2 D-CH-Korrelationsspektrum. Das erfindungsgemäße amorphe syndiotaktisch reiche Polyvinylcyclohexan besitzt einen integralen Intensitätsüberschuß der syndiotaktischen Diaden gegenüber der isotaktischen Diaden-Konfiguration.

Die an diesen Materialien bestimmte Doppelbrechung, gemessenen anhand der rheooptischen Konstante C_{R} beträgt -0.3 GPa⁻¹, der Betrag ist mehr als eine Zehnerpotenz kleiner als der für Polycarbonat (C_{R} = + 5.4 GPa⁻¹). Das Meßverfahren der rheooptischen Konstante ist in EP-A 0621 297 beschrieben. Die dazu benötigten planparallelen 150 bis 1 000 µm-Probekörper können durch Schmelzpressen oder Filmgießen hergestellt werden. Das Material kann im Vergleich zu Polycarbonat als doppelbrechungsfrei angesehen werden. Es besitzt eine hohe Wärmeformbeständigkeit, eine niedrige Wasseraufnahme, bei ausreichenden mechanischen Eigenschaften und ist daher ein ideales Material für sehr hohe Dichten der optischen Datenspeicherung (>10 Gbyte auf einer Scheibe von 120 mm Durchmesser).

Die Vinyleyelohexan(co)polymere haben im allgemeinen absolute Molekulargewichte Mw Gewichtsmittel von 1000 - 10000000, vorzugsweise von 60000 - 1000000, ganz besonders bevorzugt 70000 - 600000, bestimmt nach Lichtstreuung.

Die erfindungsgemäßen Vinylcyclohexan basierenden Homopolymere haben im allgemeinen eine Glastemperatur >140°C, vorzugsweise >145°C, ermittelt durch DSC.

Die Copolymcre können sowohl statistisch als auch als Blockcopolymere vorliegen.

Die Polymere können eine lineare Keltenstruktur besitzen als auch durch Co-Einheiten Verzweigungsstellen aufweisen (z.B. Propfcopolymere). Die Verzweigungszentren beinhalten z.B. sternförmige oder verzweigte Polymere. Die erfindungsgemäßen Polymere können andere geometrische Formen der primären, sekundären, tertiären, ggf. quartären Polymerstruktur aufweisen hierbei seinen genannt Helix, Doppelhelix, Faltblatt usw. bzw. Mischungen dieser Strukturen.

Blockcopolymere beinhalten Di-Blöcke, Tri-Blöcke, Multi-Blöcke und sternförmige Blockcopolymere.

Die VCH-(Co)Polymere werden hergestellt, indem man Derivate des Styrols mit den entsprechenden Monomeren radikalisch, anionisch, kationisch, oder durch Metallkomplex-Initiatoren bzw. Katalysatoren polymerisiert und die ungesättigten aromatischen Bindungen anschließend vollständig oder teilweise hydriert (vgl. z.B. WO 94/21694, EP-A 322 731). Sie zeichnen sich durch das überwiegende Auftreten der syndiotaktischen Konfiguration der Vinylcyclohexaneinheiten der vorliegenden Erfindung aus.

Die VCH-(Co)Polymere lassen sich beispielsweise ferner herstellen durch Hydrierung aromatischer Polystyrole bzw. deren Derivate in Gegenwart eines Katalysators. wobei als Lösungsmittel ein Ether, welcher kein α-Wasserstoff-Atom an einem zur Etherfunktion benachbarten Kohlenstoffatom besitzt, oder ein Gemisch solcher Ether oder ein Gemisch mindestens eines der genannten Ether mit für Hydrierreaktionen geeigneten Lösungsmitteln.

Die Reaktion wird im allgemeinen bei Volumenkonzentrationen der Ether-Komponente zum gesamten Lösungsmittels von 0.1 % - 100 %, vorzugweise 1 % - 60% ganz besonders bevorzugt 5 % - 50 %, durchgeführt. Die Etherkomponente kann als ein Cokatalysator bezeichnet werden.

Das Verfahren führt im allgemeinen zu einer praktisch vollständigen Hydrierung der aromatischen Einheiten. In der Regel ist der Hydriergrad ≥ 80 %, vorzugsweise ≥ 90 %, ganz besonders bevorzugt ≥ 99 %, insbesondere 99,5 bis 100 %. Der Hydriergrad läßt sich beispielsweise durch NMR oder UV-Spektroskopie bestimmen.

Die Ausgangspolymere sind allgemein bekannt (z.B. WO 94/21 694).

Als Lösungsmittel werden vorzugsweise Ether der Formel (I) eingesetzt: 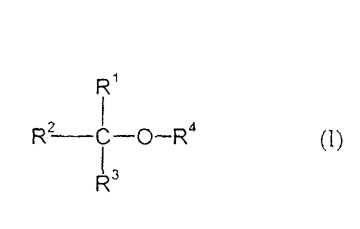 in welcher
- R¹, R², R³ und R⁴: unabhängig voneinander für C₁-C₈-Alkyl stehen, welches geradkettig oder verzweigt ist, oder für gegebenenfalls durch C₁-C₄-Alkyl substituiertes C₅-C₆-Cycloalkyl oder
zwei der Reste R¹, R², R³ und R⁴ einen Ring mit 3 bis 8, vorzugsweise 5 oder 6 Kohlenstoffatomen bilden.

Besonders bevorzugt sind Methyl-t-butylether, Ethyl-t-butylether, Propyl-t-butylether, Butyl-t-butylether, Methyl-(2-methyl-2-butyl)ether (tert. Amyl-methylether), 2-Ethoxy-2-methylbutan (Ethyl-tert.-amylether).

Die eingesetzte Menge des Katalysators hängt von dem ausgeführten Prozeß ab, dieser kann kontinuierlich, halb-kontinuierlich oder diskontinuierlich durchgeführt werden.

Das Verhältnis Katalysator zu Polymer beträgt beispielsweise im diskontinuierlichen Prozeß im allgemeinen 0,3 - 0,001, bevorzugt 0,2 - 0,005, besonders bevorzugt 0,15 - 0,01.

Die Polymerkonzentrationen, bezogen auf das Gesamtgewicht aus Lösungsmittel und Polymer betragen im allgemeinen 80 bis 1, vorzugsweise 50 bis 10, insbesondere 40 bis 15 Gew.-%.

Die Hydrierung der Ausgangspolymere wird nach allgemein bekannten Methoden durchgeführt (z.B. WO 94/21 694. WO 96/34 895, EP-A-322 731). Als Katalysatoren können eine Vielzahl von bekannten Hydrierkatalysatoren eingesetzt werden. Bevorzugte Metallkatalysatoren sind beispielsweise in WO 94/21 694 oder WO 96/34 896 genannt. Als Katalysator kann jeder für Hydrierreaktion bekannter Katalysator eingesetzt werden. Geeignet sind Katalysatoren mit großer Oberfläche (z.B. 100 - 600 m²/g) und kleinem mittleren Porendurchmesser (z.B. 20 - 500 Å). Weiterhin sind auch Katalysatoren mit kleiner Oberfläche (z.B. ≥10 m²/g) und großen mittleren Porendurchmessern geeignet, die dadurch charakterisiert sind, daß 98 % des Porenvolumens, Poren mit Porendurchmessern größer 600 Å aufweisen (z.B. ca. 1 000 - 4 000 Å) (vgl. z.B. US-A 5.654.253, US-A 5.612.422, JP-A 03076706). Insbesondere werden Raney-Nickel, Nickel auf Siliciumdioxid oder Siliciumdioxid/Aluminiumoxid, Nickel auf Kohlenstoff als Träger und/oder Edelmetallkatalysatoren, z.B. Pt, Ru, Rh, Pd, verwendet.

Die Reaktion wird im allgemeinen bei Temperaturen zwischen 0 und 500°C, vorzugsweise zwischen 20 und 250°C, insbesondere zwischen 60 und 200°C, durchgeführt.

Die für Hydrierreaktionen üblichen Lösungsmitteln verwendbaren Lösungsmitteln sind beispielsweise in DE-AS 1 131 885 beschrieben (siehe oben).

Die Reaktion wird im allgemeinen bei Drücken von 1 bar bis 1000 bar, vorzugsweise 20 bis 300 bar, insbesondere 40 bis 200 bar, durchgeführt.

Die erfindungsgemäßen auf Vinylcyclohexan basierenden Polymere oder Copolymere eignen sich ausgezeichnet zur Herstellung von optischen Datenspeichern, vorzugsweise mit Dichten der Datenspeicherung >5, insbesondere >10 Gbyte, bezogen auf eine Scheibe von 120 mm Durchmesser.

Als optische Datenspeicher werden beispielhaft genannt:
- Magneto-optische Disc (MO-Disc)
- Mini-Disc (MD)
- ASMO (MO-7) ("Advanced storage magnetooptic")
- DVR (12 Gbyte Disc)
- MAMMOS ("Magnetic Amplifying magneto optical system")
- SIL and MSR ("Solid immersion lens" and "magnetic superresolution")
- CD-ROM (Read only memory)
- CD, CD-R (recordable), CD-RW (rewritable), CD-I (interactive), Photo-CD
- Super Audio CD
- DVD,DVD-R (recordable), DVD-RAM (random access memory); DVD=Digital versatile disc
- DVD-RW (rewritable)
- PC + RW (Phase change and rewritable)
- MMVF (multimedia video file system)

Die erfindungsgemäßen Polymere sind aufgrund ihrer hervorragenden optischen Eigenschaften weiterhin besonders geeignet zur Herstellung von optischen Materialien, z.B. für Linsen, Prismen, Spiegel, Farbfilter etc. Ferner als Medien für halographische Abbildungen (z.B. Scheck-, Kredit-Karten, Ausweise, dreidimensionale holograhische Bilder). Die Materialien können als transparente Medien zum Einschreiben dreidimensionaler Strukturen z.B. aus fokusierter kohärtenter Strahlung (LASER) insbesondere als dreidimensionale Datenspeicher oder zur dreidimensionalen Abbildung von Gegenständen eingesetzt werden.

Das Material kann üblicherweise anstelle oder in Verbindung mit Glas bis Gebrauchstemperaturen von 145°C eingesetzt werden. Außenanwendungen für die transparenten Materialien sind Überdachungen, Fensterscheiben, Folien, Verglasung von Gewächshäuser z.B. in Form von Doppelstegplatten. Weitere Anwendungen sind Abdeckungen zum Schutz mechanisch empfindlicher Systeme bei gleichzeitig hoher Transparanz z.B. im Bereich Photovoltatik, insbesondere Solarzellen oder Sonnenkollektoren. Die erfindungsgemäßen Kunststoffe können mit anderen Materialien beschichtet werden insbesondere mit Nanopartikeln zur Erhöhung der Kratzfestigkeit, Metallen und anderen Polymeren.

Anwendungen für den Haushalt sind zum Beispiel transparente Verpackungsmaterialien mit geringer Wasscrdurchlässigkeit, extrusions- oder spritzgußhergestellte Haushaltsgegenstände z.B. Becher und Behälter. Ferner Haushaltsgeräte sowie transparente Lampenabdeckungen.

Die Kunststoffe können als temperaturbeständige Hartschäume zur Isolation im Bau- und Technikbereich (Haus- und Geräteisolation z.B. für Kühlschränke) eingesetzt werden und zum Beispiel Polystyrol- und Polyurethan-Schaum ersetzen. Ein Vorteil ist die hohe Dauergebrauchstemperatur.

Aufgrund der geringen Dichte (d <1) und der daraus resultierenden Gewichtscrsparnis sind die Materialien besonders geeignet für Anwendungen in der Automobil-, Luft- und Raumfahrtindustrie für Instrumententafeln, transparente Abdeckungen von Instrumenten Systemen sowie von Lichtquellen. Bordverglasung und Isolationsmaterial.

Die Materialien sind Isolatoren für elektrischen Strom und eignen sich daher für die Herstellung von Kondensatoren (z.B. Diclektrika), elektronische Schaltkreise und Gerätegehäuse. Weitere Anwendungen in der Elektroindustrie bestehen insbesondere aufgrund der Kombination von hoher optischer Transparenz bei hoher Wärmeformbeständigkeit, geringer Wasseraufnahme in Verbindung mit Licht aus geeigneten emitierenden Quellen. Die Materialien eignen sich daher für die Herstellung von Leuchtdioden, Laserdioden. Matrizes für organische, anorganische und polymere elektrolumineszierende Materialien, optoelektrische Signalaufnahmegeräte, Datenübertragungssysteme durch Glasfaserersatz (z.B. polymere Lichtwellenleiter), transparente Materialien für elektronische Anzeigemedien (Bildschirme, Displays, Projektionsapparate) z.B. von flüssigkristallinen Substraten.

Die Materialien eignen sich für Anwendungen in der Medizintechnik für transparente Extrusions- oder Spritzgußartikel für sterile und unsterile Analyscngefäße, Petrischalen, Mikrofilterplatten, Objektträger. Schläuche, Beatmungstubi, Kontaktlinsen, Brillengläser und Behälter von z.B. Infusionslösungen oder Medikamentenlösungen, Extrusions- und Spritzgußartikel für Anwendungen im Blutkontakt insbesondere zur Herstellung von Spritzen, Kanülen, Katheter, Kurz- und Langzeitimplantaten (z.B. künstliche linsen). Blutschläuchen, Membranen zur Blutwäsche. Dialysatoren. Oxygenatoren, transparenten Wundabdeckungen, Blutkonserven und Nahtmaterialien.

### Beispiele

### Beispiel 1

Der Autoklave wird mit Inertgas (Argon) gespült. Die Polymerlösung und der Katalysator werden zugegeben (Tabelle 1). Nach dem Verschließen wird mehrmals mit Schutzgas dann mit Wasserstoff beaufschlagt. Nach dem Entspannen wird der jeweilige Wasserstoffdruck eingestellt und unter Rühren auf die entsprechende Reaktionstemperatur geheizt. Der Reaktionsdruck wird nach Einsetzen der Wasserstoffaufnahme konstant gehalten.

Nach beendeter Reaktion wird die Polymerlösung filtriert. Das Produkt wird in Methanol gefällt und bei 120°C getrocknet. Das isolierte Produkt zeigt die in der tabelle 2 aufgeführten physikalischen Eigenschaften.

### Vergleichsbeispiel A

### Syndiotaktisches Polyvinylcyclohexan

Ein ausgeheizter unter Argon stehender 250 nil Dreihalskolben mit Rückflußkühler wird der Reihe nach mit 50 ml abs. Toluol, 20 ml Methylaluminoxan (10%ige Lösung in Toluol), 16,5 mg (0,075 mmol) Titancyclopentadienyltrichlorid und 10.4 g (0.1 mol) Styrol gefüllt. Die Reaktionsmischung wird auf 50 °C aufgeheizt und 2 h bei dieser Temperatur gehalten. Die Reaktion wird durch die Zugabe von acidem Methanol beendet. Das Polymer wird mit 200 ml Methanol mehrmals gewaschen und bei 80 °C getrocknet.

12.5 g Palladium auf Bariumsulfat werden mit Wasserstoff reduziert und mit Schutzgas inertisiert. Ein IL-Druckreaktor wird mit Inertgas gespült. In den Autoklaven werden 2.5 g syndiotaktisches Polystyrol gelöst in Cyclohexan und der Katalysator zugegeben (Tabelle 1). Der Wasserstoffdruck wird auf 50 bar eingestellt und der Ansatz auf 200 °C geheizt. Nach 24 Stunden wird die Reaktion beendet, entspannt und die Polymerlösung wird filtriert. Das Filtrat wird in Methanol gefällt und im Vakuum bei 120 °C getrocknet. Das isolierte Produkt zeigt die in der Tabelle 2 aufgeführten physikalischen Eigenschaften.

### Vergleichsbeispiel B

### Isotaktisches Polyvinylcyclohexan

In einen ausgeheizten, mit Inertgas gefüllten IL-Dreihalskolben mit Rückflußkühler werden 100 ml abs. Toluol, 12.5 g (0.11 mol) Vinylcyclohexan und 5 mmol Trielhylaluminium bei Raumtemperatur überführt.

1 ml Triethylaluminium (1M) und 2 ml Titan(IV)chlorid (1M) in 12,5 ml Toluol werden 30 Minuten bei 80 °C gerührt und in die Monomerlösung gegeben.

Die Reaktiunsmischung wird auf 60 °C aufgeheizt, 50 Minuten bei dieser Temperatur gerührt und anschließend für 90 min bei 85 °C gehalten. Die Polymerisation wird durch Zugabe von Methanol beendet. Das Produkt wird in Methanol unter Rückfluß gekocht, abfiltriert, anschließend mit Methanol und Aceton gewaschen. Das Polymer wird bei 60 °C im Vakuum getrocknet. Das Produkt zeigt die in der Tabelle 2 aufgeführten physikalischen Eigenschaften.

### Vergleichsbeispiel C

### Polycarbonat aus 2,2-Bis(4-hydroxyphenyl)propan

Ein 150 µm dicker Film von Polycarbonat auf Basis von 2,2-Bis-(4-hydroxyphenyl)propan (Makrolon CD 2005, Bayer AG) wird durch Schmelzpressen hergestellt. An diesem Film wird eine Glastemperatur von 142 °C und eine rheooptische Konstante von +5,4 GPa⁻¹ gemessen (vgl. Tabelle 2).

**Tabelle 1**

| Hydrierung von Polystyrol mit unterschiedlicher Taktizität | | | | | | | |
|---|---|---|---|---|---|---|---|
| Biespiel-Nr. | Polymer-Masse g | Lösungsmittel ml | Katalysator.-Masse g | Reakionstemp. °C | Wasserstoff-Druck bar | Reaktionszeit h | Hydriergrad.¹⁾ % |
| I | 25.9²⁾ | 300 ml Cyclohexan | 12,5³⁾ | 200 | 50 | 6 | 100 |
| A | 2,5 | 300 ml Cyclohexan | 12,5⁴⁾ | 200 | 85 | 24 | 100 |
| 1) Ermittelt durch ¹H-NMR Spektroskopie | | | | | | | |
| 2) Polystyrol, Typ 158 k glasklar. Mw = 280000 g/mol, BASF AG, Ludwigshafen, Deutschland | | | | | | | |
| 3) Ni /SiO₂/Al₂O₃, 64-67 % Nickel, Aldrich | | | | | | | |
| 4) 5 % Palladium auf Bariumsulfat, Aldrich, | | | | | | | |

**Tabelle 2**

| Thermische und optische Eigenschaften der verschiedenen Vinyleyclohexan Homopolymere | | | | | |
|---|---|---|---|---|---|
| Beispiel Nr. | isotakt. Diaden³ % | Syndiotakl. Diaden³ % | Glastemp. Tg °C | Schmelzpkt. Tm °C | Rheooptische Konstante CR GPa⁻¹ |
| I | 41 | 59 | 145 | - | -0,3 |
| A | <2 | >98 | 126 | 295 | -²⁾ |
| B | >98 | <2% | -¹⁾ | 369 | -²⁾ |
| C | - | - | 142 | - | +5,4 |
| 1) Durch DSC-Messungen nicht detektiert | | | | | |
| 2) Rheooptische Konstante C_{R} kann nicht ermittelt werden, da die Proben kristallin sind. | | | | | |
| 3) Ermittelt durch zweidimensionale Kernresonanzspektroskopie (2D-NMR) | | | | | |

Das erfindungsgemäße amorphe Polyvinylcyclohexan (Beispiel 1) zeichnet sich durch das überwiegende Auftreten der syndiotaktischen Diaden aus. Das Material besitzt im Vergleich zu Polycarbonat eine vom Betrag weitaus niedrigere rheooptische Konstante C_{R} bei ähnlich hoher Wärmeformbeständigkeit (Glastemperatur). Es ist daher besonders geeignet für hohe Dichten der optischen Datenspeicherung. Die vorbeschriebenen syndiotaktischen und isotaktischen Materialien sind aufgrund deren Kristallinität und geringen Tranzparenz für optische Anwendungen ungeeignet.

## Patentansprüche

1. Vinylcyclohexan basierendes Polymer oder Copolymer, wobei die Comonomere ausgewählt sind aus mindestens einem Monomer der Gruppe der Olefine, Alkylester der Acrylsäure oder Methacrylsäure, Cyclopentadien, Cyclohexen, Cyclohexadien, gegebenenfalls substituiertes Norbornen, Dicyclopentadien, Dihydrocyclopentadien, gegebenenfalls substituierte Tetracyclododecene, kernalkylierte Styrolc, α-Methylstyrol, Divinylbenzol, Vinylester, Vinylsäuren, Vinylether, Vinylacetat, Acrylnitril, Methacrylnitril, Maleinsäureanhydrid, bei der Herstellung eingesetzt werden können, mit syndiotaktischer Konfiguration, **dadurch gekennzeichnet, daß** die Menge an Diaden größer als 50,1 %. kleiner als 74 % ist.

2. Polymer gemäß Anspruch 1, wobei die Menge an Diaden 52 bis 70 % beträgt.

3. Polymer gemäß Anspruch 1, wobei das Vinylcyclohexan basierende Polymer eine wiederkehrende Struktureinheit der Formel 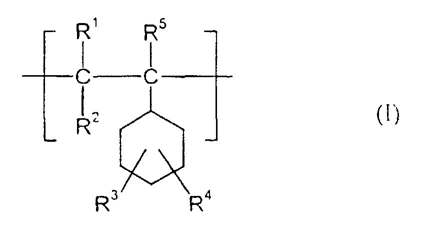 in welcher
R³ und R⁴ unabhängig voneinander für Wasserstoff oder C₁-C₆-Alkyl oder R³ und R⁴ gemeinsam für Alkylen stehen.
R¹, R² und R⁵ unabhängig voneinander für Wasserstoff oder C₁-C₆-Alkyl stehen,
aufweist.

4. Verwendung von Polymeren oder Copolymeren gemäß Anspruch 1 bis 3 zur Herstellung von optischen Datenspeichern, Formkörpern und Folien.

5. Optische Datenspeicher, erhältlich aus Vinylcyclohexan-basierenden Polymeren oder Copotymeren gemäß Anspruch 1.

6. Formkörper und Folien, erhaltlich aus Vinylcyclohexan-basierenden Polymeren oder Copolymeren gemäß Anspruch 1.

## Claims

1. Polymer or co-polymer based on vinyl cyclohexane, wherein the co-monomers which may be used in production are selected from at least one monomer of the group of the olefins, alkyl esters of acrylic acid or methacrylic acid, cyclopentadiene, cyclohexene, cyclohexadiene, optionally substituted norbornene, dicyclopentadiene, dihydrocyclopentadiene, optionally substituted tetracyclododecenes, nucleus-alkylated styrenes, α-methylstyrene, divinyl benzene, vinyl esters, vinyl acids, vinyl ethers, vinyl acetate, acrylonitrile, methacrylonitrile, maleic anhydride, with syndiotactic configuration, **characterized in that** the quantity of diads is greater than 50.1%, less than 74%.

2. Polymer according to Claim 1, wherein the quantity of diads is 52 to 70%.

3. Polymer according to Claim 1, wherein the polymer based on vinyl cyclohexane has a repeating structural unit of the formula 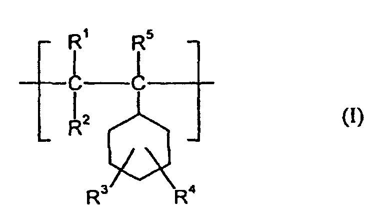 in which
R³ and R⁴ independently of each other stand for hydrogen or C₁-C₆ alkyl or R³ and R⁴ jointly stand for alkylene,
R¹, R² and R⁵ independently of each other stand for hydrogen or C₁-C₆ alkyl.

4. Use of polymers or copolymers according to Claim 1 to 3 for producing optical data storage media, moulded bodies and films.

5. Optical data storage media, obtainable from polymers or copolymers based on vinyl cyclohexane according to Claim 1.

6. Moulded bodies and films, obtainable from polymers or copolymers based on vinyl cyclohexane according to Claim 1.

## Revendications

1. Polymère ou copolymère à base de vinylcyclohexane, des comonomères représentant au moins un monomère choisi parmi le groupe constitué par les oléfines, les esters alkyliques de l'acide acrylique ou de l'acide méthacrylique, le cyclopentadiène, le cyclohexène, le cyclohexadiène, le norbornène le cas échéant substitué, le dicyclopentadiène, le dihydrocyclopentadiène, les tétracyclododécènes le cas échéant substitués, les styrènes alkylés au noyau, l'α-méthylstyrène, le divinylbenzène, les esters vinyliques, les acides vinyliques, les éthers vinyliques, l'acétate de vinyle, l'acrylonitrile, le méthacrylonitrile, l'anhydride maléique, pouvant être mis en oeuvre lors de la préparation, à configuration syndiotactique, **caractérisé en ce que** la quantité des diades est supérieure à 50,1 % et est inférieure à 74 %.

2. Polymère selon la revendication 1, dans lequel la quantité de diades s'élève de 52 à 70 %.

3. Polymère selon la revendication 1, dans lequel le polymère à base de vinylcyclohexane présente une unité de structure récurrente répondant à la formule 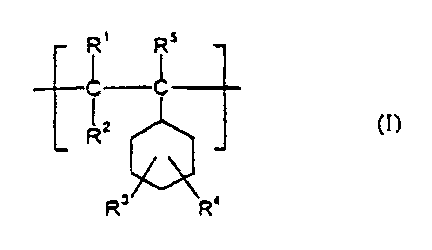 dans laquelle
R³ et R⁴ représentent indépendamment l'un de l'autre un atome d'hydrogène ou un groupe alkyle en C₁ - C₆ ou bien R³ et R⁴ représentent ensemble un groupe alkylène,
R¹, R² et R⁵ représentent indépendamment l'un de l'autre un atome d'hydrogène ou un groupe alkyle en C₁ - C₆.

4. Utilisation de polymères ou de copolymères selon les revendications 1 à 3, pour la fabrication de mémoires optiques, de corps moulés et de feuilles.

5. Mémoires optiques, que l'on obtient à partir de polymères ou de copolymères à base de vinylcyclohexane selon la revendication 1.

6. Corps moulés et feuilles, que l'on obtient à partir de polymères ou de copolymères à base de vinylcyclohexane selon la revendication 1.
